# EUROPEAN PATENT APPLICATION

(11) **EP 1 804 318 A2**
(43) Date of publication of application: **04.07.2007**
(21) Application number: 06127270.4
(22) Date of filing: 28.12.2006
(51) Int. Cl.: H01M 2/04

(54) **Rechargeable battery**

(30) Priority: 29.12.2005 KR 20050134523
(71) Applicant: Samsung SDI Co., Ltd., Suwon-si, Gyeonggi-do (KR)
(72) Inventor: Jung, Sangsok, Gyeonggi-do (KR)
(74) Representative: Derry, Paul Stefan

(57) **Abstract**

A secondary battery including an electrode assembly in which anode and cathode electrodes are laminated with a separator interposed therebetween and are wound together, a can to receive the electrode assembly, and a cap assembly attached to an opening of the top of the can, the cap assembly having an electrode terminal that is electrically connected with one of the electrodes of the electrode assembly and including two protrusion parts formed thereon.

## Description

An aspect of the present invention relates to a secondary battery, and, more particularly, to a secondary battery in which weldability between an electrode terminal and a component to be contacted to an upper surface thereof is improved.

Generally, a secondary battery is a battery that is capable of being charged and discharged several times, whereas a primary battery cannot be charged. As such, secondary batteries have been used for high-tech electronics (e.g., cellular phones, notebook computers, camcorders, and others).

In particular, an operating voltage of a lithium secondary battery is 3.6 volts, which is three times larger than that of a nickel-cadmium (Ni/Cd) battery or a nickel-hydrogen battery (Ni/H2), which is often used to provide power to electronic equipment. Thus, the use of lithium secondary batteries has rapidly spread. In addition, lithium secondary batteries have a high characteristic energy density per unit weight.

Generally lithium secondary batteries use a lithium-based oxide as a cathode active material and a carbon material as an anode active material. Further, the lithium secondary batteries have been manufactured in various shapes, such as cylinders, polygons, pouches, and others.

With respect to polygonal lithium secondary batteries, polygon-shaped secondary batteries generally include a polygon-shaped can, an electrode assembly received inside the can, and a cap assembly attached to the can. The cap assembly comprises a cap plate that is attached to the top of the can, an electrode terminal that is positioned through a terminal through-hole, a gasket placed on the outer surface of the electrode terminal to electrically insulate the electrode terminal from the cap plate, an insulation plate that is positioned under the cap plate, and a terminal plate that is positioned under the insulation plate so as to allow electricity to flow through the electrode terminal. One electrode of the electrode assembly is electrically connected with the electrode terminal through an electrode tab and the terminal plate. Another electrode is electrically connected with either the cap plate or the can through an electrode tab.

The electrode terminal is either welded at one end to a safety device, such as a positive temperature coefficient (PTC) element, a thermal breaker, a protection circuit module (PCM) or the like, or is welded to a connection lead. Such a safety device is connected to a cathode and an anode of the electrode assembly, and causes a break in the current flow when the battery voltage rises suddenly due to an increase in battery temperature or an overcharge/over-discharge so as to prevent battery damage.

However, the welding part of the conventional electrode terminal and the component to be in contact with the electrode terminal are flat. As such, poor welding results occur and time required to complete the welding is relatively long.

Accordingly, an aspect of the present invention provides a secondary battery in which the welding between an electrode terminal and a component to be in contact with an upper surface of the electrode terminal is improved.

According to an aspect of the present invention, there is provided a secondary battery including an electrode assembly in which anode and cathode electrodes are laminated with a separator interposed therebetween and are wound together, a can to receive the electrode assembly, and a cap assembly attached to an opening of the top of the can, the cap assembly having an electrode terminal that is electrically connected with one of the electrodes of the electrode assembly and including two protrusion parts formed thereon.

According to another aspect of the prevent invention, there is provided a secondary battery comprising: an electrode assembly in which anode and cathode electrodes are laminated with a separator interposed therebetween and are wound together; a can to receive the electrode assembly; and a cap assembly attached to an opening of the top of the can, the cap assembly having an electrode terminal that is electrically connected with one of the electrodes of the electrode assembly, wherein a component to be in contact with the electrode terminal includes protrusion parts formed thereon which are welded to the electrode terminal.

Additional and/or other aspects and of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is an exploded perspective diagram illustrating a secondary battery according to an embodiment of the present invention;
Figure 2 is a partial perspective diagram illustrating a PTC element being connected to an electrode terminal of the secondary battery according to an embodiment of the present invention;
Figure 3 is a plane diagram illustrating the electrode terminal of the secondary battery of Figure 2;
Figure 4 is a cross-sectional diagram illustrating a contact component being welded to the electrode terminal of Figure 3; and
Figure 5 is a cross-sectional diagram illustrating an electrode terminal and a contact component being in contact with each other according to an embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

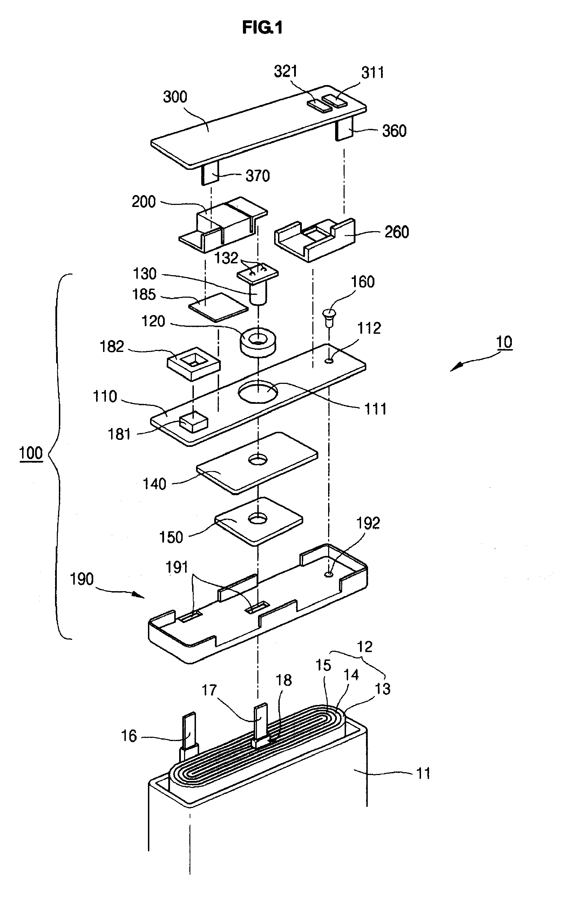

Figure 1 is an exploded perspective diagram illustrating a secondary battery 10 according to an embodiment of the present invention. As shown in Figure 1, the secondary battery 10 comprises an electrode assembly 12, a can 11 that receives the electrode assembly 12, and a cap assembly 100 that is attached to an upper portion of the can 11. The electrode assembly 12 is generally prepared by flattening a cathode electrode 13 and an anode electrode 15 so as to increase electric capacity of each, laminating the anode and cathode electrodes 13 and 15 with a separator 14 interposed therebetween and winding them into a jelly roll. The anode 15 may be formed by coating a collector made of copper with carbon, as an anode active material. Meanwhile, the cathode 13 may be formed by coating a collector made of aluminum foil with lithium cobalt oxide, as a cathode active material. The separator 14 is made of polyethylene, polypropylene or a co-polymer thereof. A width of the separator 14 is wider than widths of the cathode 13 and the anode 15 to, thereby, prevent an electric short circuit between the electrode plates 13 and 15. A cathode tab 16 and an anode tab 17 are connected with each of the electrodes and extended outwardly from the electrode assembly 12. An insulation tape 18 is wound around boundary parts where the cathode tab 16 and the anode tab 17 are extended outwardly from the electrode assembly 12 so as to prevent an electrical short between the electrode plates 13 and 15.

The can 11 of a polygon-shaped secondary battery, as shown in Figure1, is a rectangular parallelepiped container made of a metallic material, which is prepared, according to an embodiment of the invention, by a deep drawing process. The can, therefore, is able to perform the role of a terminal itself. According to additional embodiments of the invention, the can is made of aluminum or other lightweight, conductive metals, or an aluminum alloy. The can 11 receives the electrode assembly 12 and an electrolyte, and the opening of the top thereof, through which the electrode assembly 12 is placed, is sealed by a cap assembly 100.

The cap assembly 100 comprises a cap plate 110, an electrode terminal 130, an insulation plate 140 and a terminal plate 150. A through-hole 111 is defined in the cap plate 110 through which the electrode terminal 130 is positioned with a gasket 120 placed on the outer surface thereof to electrically insulate the cap plate 110. The insulation plate 140 is positioned under the cap plate 110. The terminal plate 150 is positioned under the insulation plate 140. The terminal plate 150 is attached to a bottom end of the electrode terminal 130.

The anode 15 of the electrode assembly 12 is electrically connected with the electrode terminal 130 through the anode tab 17 and the terminal plate 150. The cathode tab 16 is welded with the cap plate 110 or the can 11. An insulation case 190 may be further positioned under the terminal plate 150. Meanwhile, the battery may also be designed by altering electrode polarity.

An electrolyte injection hole 112 is formed on one side of the cap plate 110 to allow for an injection of an electrolyte into the can 11. The electrolyte injection hole 112 is closely sealed by a sealing part 160 after the injection of the electrolyte. Various embodiments of the sealing part 160 are possible. For example, the sealing part 160 may be a mechanically pressurized ball, having a diameter that is larger than that of the electrolyte injection hole 112, which is forced into the electrolyte injection hole, with edges of the sealing part 160 being welded. Further, the electrolyte injection hole 112 may be closely sealed by welding a sealing plate, having a size which is larger than that of the electrolyte injection hole 112, to an upper surface of the electrolyte injection hole.

Meanwhile, a protrusion part 181 is formed at one side of the cap plate 110 to allow the cap plate to be structurally attached to a holder 182. The holder 182 allows for a filling of molding resin into the space between a protective circuit module (PCM) 300 and the cap assembly 100 followed by a molding process. The holder 182 provides resistance to exterior forces, such a twisting, to prevent the solidified resin from being undesirably separated from certain components due to the exterior forces.

As is described above, the opening of the top of the can 11 is sealed by the cap assembly 100 to form a cell, which is referred to as a unit cell or a bare cell. The electrode terminal 130 of such a unit cell is electrically connected with one end of a safety device, such as a positive temperature coefficient (PTC) element, a thermal breaker, a protective circuit module (PCM) or the like. The safety device is connected to a cathode and an anode, and causes a break in the electrical current flow when the battery voltage rises suddenly due to an increase in battery temperature or an overcharge/over-discharge to prevent battery damage.

As shown in Figure1, one end of the thermal breaker 200 is welded to an upper surface of the electrode terminal 130. Protrusion parts 132 are formed on the upper surface of the electrode terminal 130. Accordingly, an improvement in the weldability between the electrode terminal 130 and a component, such as the thermal breaker 200, which is electrically connected with an input/output terminal 321 to be connected with an external circuit, is generated. In particular, the component contacts the protrusion parts 132.

Meanwhile, an insulation member 185 is placed between the thermal breaker 200 to contact the electrode terminal 130 having negative polarity, and the cap plate 110 having positive polarity to provide electrical insulation therebetween. The thermal breaker 200 is welded with an anode connection terminal 370, and is electrically connected to an external input/output terminal 321 through a protection circuit (not shown). Further, a connection lead 260, which is connected to the cap plate 110, is welded to a cathode connection terminal 360, and electrically connected with an external input/output terminal 311. However, electrode polarities thereof may be altered.

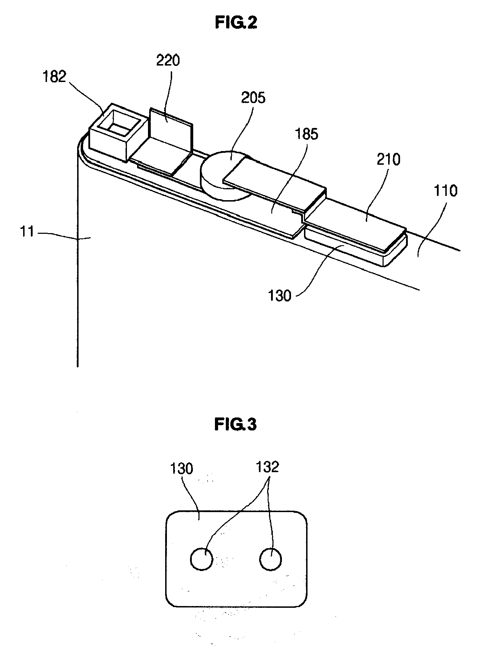

Figure 2 is a partial perspective diagram illustrating a PTC element 205 that is connected to the electrode terminal 130 of the secondary battery according to an embodiment of the present invention. The embodiment of Figure 2 is similar to that of Figure 1, except that the PTC element 205 is connected to the electrode terminal 130 through a contact component 210. The PTC element 205 is then connected with an anode connection terminal (not shown) through a connection lead 220.

The welding between the contact component 210 and the electrode terminal 130 will be explained in detail below.

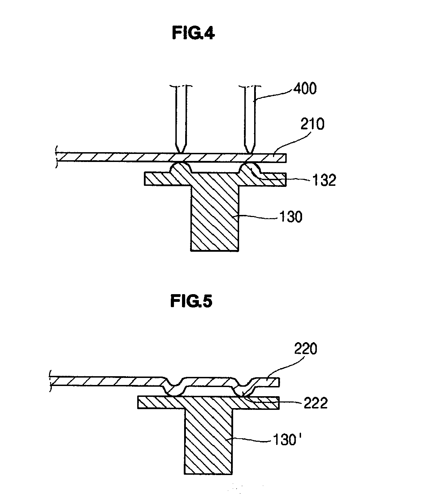

Figure 3 is a plane diagram illustrating the electrode terminal of the secondary battery of Figure 2, and Figure 4 is a cross-sectional diagram illustrating the contact component being welded to the electrode terminal of Figure 3.

Referring to Figures 3 and 4, the protrusion parts 132 are formed on an upper surface of the electrode terminal 130. The protrusion parts 132 may be formed either by molding the electrode terminal 130, and then pressurizing one point of a lower surface thereof, or by molding the electrode terminal with the protrusion parts 132 already generated in the molded shape.

The protrusion parts 132 are welded to the contact component 210. In this case, the contact component 210 comprises a flat surface including a contact part that contacts the protrusion parts 132. According to an embodiment of the invention, a resistance-welding process is used because the resistance welding process features low welding temperature and high-speed welding, and ensures a high level of stability to the welded part(s). The resistance welding process is achieved through automatic operations and, as such, may be performed by unskilled operators, and requires short welding time so as to be suitable to mass production. The resistance welding process is performed by pressurization using Joule heat that occurs when an electric current is passed through metals. In detail, surfaces of two metals to be welded to one another are joined together, an electric current is then passed between the two metal surfaces, and pressure is applied so that heat is generated on the contact surface and in the region thereof by contact resistance, occurring on the contact surface, and metal resistance. As a result a temperature of the metal surfaces increases. Accordingly, metal surfaces are melted by the joule heat and adhere to one another by the applied pressure.

As shown in Figure 4, among resistance-welding processes, single-phase alternating current (AC) spot welding is described. Herein, two welding rods 400 are placed at one side of the welding objects, instead of being placed at both sides thereof to face each other, and then welded.

In order for the resistance welding process to be most effective, the contact component 210 may be made of a material including nickel. Generally, a metal, which has a high electric resistance, a low thermal conductivity, a low melting point and a broad temperature range of a plastic region, is suitable for use in the resistance welding process. Nickel has an electric resistance of 6.84 [uΩcm] and a thermal conductivity of 0.22 [cal/ cm·s· °C], at 20 °C. Aluminum, on the other hand, has an electric resistance of 2.655 [uΩcm] and a thermal conductivity of 0.53 [cal/cm·s·°C], at the same temperature. Accordingly, a material including nickel rather than aluminum is suitable to the resistance welding process.

Meanwhile, the two protrusion parts 132 are formed on a surface of the electrode terminal. In particular, the protrusion parts 132 are spaced from each other on the circumferential periphery of an upper surface thereof. In accordance with an embodiment of the invention, the two protrusion parts should be spaced from each other at a predetermined regular distance because performing spot welding at the end part of the welding objects is inappropriate, and because, if the two protrusion parts are joined with each other or too close to one another, the supporting strength of the generated structural joint becomes weaker. Therefore, welded parts are spaced from each other so as to minimize an influence of welding heat thereon.

As is described above, when welding the contact part of the protrusion parts 132 of the electrode terminal 130 and the contact component 210, differently from the conventional flat surface structure, contact resistance is concentrated on the protrusion parts 132, so that melting occurs easily and rapidly by Joule heat. Accordingly, welding may be completed in a short time, material loss from the contact part is minimized, and good characteristic weldability is achieved to prevent the welded parts from being separated from one another.

Figure 5 is a cross-sectional diagram illustrating an electrode terminal and a contact component being in contact with each other according to an embodiment of the present invention.

The embodiment of Figure 5 is similar to those of Figures 2 to 4, except that a protrusion part 222 is formed on the contact component 220 and is welded to an upper surface of an electrode terminal 130'. Herein, the protrusion part 222 may be formed either by molding the flat-type contact component 220, and then pressurizing one point of an upper surface thereof downwardly, or by molding the contact component 220 to have the protrusion part 222 already generated. In accordance with this embodiment of the invention, welding can be completed in a short time, material loss from the contact part may be minimized, and good characteristic weldability is achieved to prevent the welded parts from being separated from one another.

Of course it is understood that other embodiments of the invention are understood to be possible. For example, the protrusion parts 132 may be disposed on both the electrode terminal 130 and the component 200. In addition, the arrangement of the protrusion parts 132 on either the electrode terminal 130 and the component 200 may be varied as long as an appropriate distance is maintained between the protrusion parts 132 such that the heat generated by the welding of one of the protrusion parts does not negatively impact the weldability of the other(s). In yet other embodiments the number of the protrusion parts 132 may be increased as necessary to form a particularly strong welding.

As is described above, the secondary battery, according to aspects of the present invention, produces an effect in which the electrode terminal and the component to contact the electrode terminal contact each other through protrusion parts formed in either the electrode terminal alone, the component alone, or both the electrode terminal or the component. The contacting parts of each of these features are then welded together. Therefore, welding may be completed in a short time, material loss from the welded part is minimized, and good characteristic weldability may be achieved to prevent the welded part from being separated.

Although a few embodiments of the present invention have been shown and described, it would be appreciated by those skilled in the art that changes may be made in these embodiments without departing from the scope of the invention as defined in the appended claims.

## Claims

1. A rechargeable battery, comprising:
a can (11);
an electrode assembly (12) disposed inside the can (11) and comprising an anode electrode (15) and a cathode electrode (13) laminated with a separator (14) interposed therebetween, and wound together; and
a cap assembly (100) attached to an opening of a top of the can (11), the cap assembly (100) having an electrode terminal (130) electrically connected to one of the electrodes (13, 15) of the electrode assembly (12), the electrode terminal (130) including two protrusion parts (132) formed thereon.

2. The rechargeable battery according to claim 1, wherein the two protrusion parts (132) protrude from an upper surface of the electrode terminal (130).

3. The rechargeable battery according to claim 1 or 2, wherein a contact part of a component (200, 210) and the protrusion parts (132) are welded to each another.

4. The rechargeable battery according to claim 3, wherein the contact part of the component (210) is electrically connected with an input and/or output terminal to be connected with an external circuit.

5. The rechargeable battery according to claim 3 or 4, wherein the contact part of the component (200, 210) comprises a flat surface to contact the protrusion parts (132).

6. The rechargeable battery according to any of claims 3 to 5, wherein the welding is performed by a resistance-welding process.

7. The rechargeable battery of any of claims 3 to 6, wherein the contact part of the component (200, 210) comprises nickel.

8. A rechargeable battery comprising:
a can (11);
an electrode assembly (12) disposed inside the can (11) and comprising an anode electrode (15) and a cathode electrode (13) laminated with a separator (14) interposed therebetween and wound together; and
a cap assembly (100) attached to an opening of a top of the can (11), the cap assembly (100) having an electrode terminal (130') electrically connected to one of the electrodes (13, 15) of the electrode assembly (12), and a component (220) in contact with the electrode terminal (130'), the component (220) including protrusion parts (222) formed thereon which are welded to the electrode terminal (130').

9. A cap assembly for a rechargeable battery including a can (11) and an electrode assembly (12), in which an anode electrode (15) and a cathode electrode (13) are laminated with a separator (14) interposed therebetween and are wound together, the cap assembly (100) closing an opening of the can (11) and comprising:
an electrode terminal (130, 130') insulated from the can (11) and connected to an anode or a cathode lead coupled to the anode or cathode electrodes (13, 15) of the electrode assembly (12), respectively; and
a component (200, 210, 220), welded to the electrode terminal (130, 130') at a contact surface, the component (200, 210, 220) being connected with an input and/or output terminal that is coupled to an external circuit, wherein a surface of the electrode terminal (130) at the contact surface and/or a surface of the component (200, 210, 220) at the contact surface includes protrusions (132, 222).

10. The cap assembly according to claim 9, further comprising a holder (182) to prevent damage to the cap assembly by resisting exterior forces on the rechargeable battery.

11. The cap assembly according to claim 9 or 10, wherein the component (210, 220) comprises a safety device to prevent an increased flow of current in and/or from the rechargeable battery.

12. The cap assembly according to any one of claims 9 to 11, wherein at least one of the surfaces of the electrode terminal and the component comprise nickel.

13. The cap assembly according to any one of claims 9 to 12, wherein the protrusions (132, 222) are separated from one another by a distance sufficient to maintain a predetermined strength of the welding.

14. A process of manufacturing a cap assembly for a rechargeable battery comprising:
forming an electrode terminal (130, 130') to be coupled to an electrode assembly (12) received in a can (11) of the rechargeable battery and a component (200, 210, 220) to be connected to the electrode terminal (130, 130') at a contact surface and to be coupled to an external circuit;
forming protrusions (132, 222) on the electrode terminal (130, 130') and/or the component (222); and
resistance-welding the protrusions (132) of the electrode terminal (130) to the component (200, 210) or the protrusions (222) of the component (220) to the electrode terminal (130') or the protrusions of the electrode terminal to the protrusions of the component.

15. The process according to claim 14, wherein the resistance welding comprises:
placing the protrusions (132, 222) of the electrode terminal (130) or the component (220) and corresponding portions of the component or the electrode respectively in contact with one another;
passing an electric current through the protrusions (132, 222) and the corresponding portions; and
pressurizing the protrusions (132, 222) and the corresponding portions.

16. The process according to claim 15, wherein the electric current is single-phase alternating current (AC).

17. The process according to claim 15 or 16, wherein at least one of the protrusions (132, 222) and the corresponding portions comprise nickel.

18. The process according to any of claims 14 to 17, wherein the protrusions (132, 222) are formed at a predetermined distance from another to maintain a predetermined strength of the welding.
